# EUROPEAN PATENT APPLICATION

(11) **EP 0 778 115 A1**
(43) Date of publication of application: **11.06.1997**
(21) Application number: 96203435.1
(22) Date of filing: 04.12.1996
(51) Int. Cl.: B29C 45/00, B29C 45/26, B29C 45/33

(54) **Method for forming an object by means of injection moulding, and mould for application of the method**

(30) Priority: 04.12.1995 NL 1001813
(71) Applicant: Basic Market, Product & Production Development B.V., 1075 HW Amsterdam (NL)
(72) Inventor: van der Steen, Dirk, 2322 Minderhout (BE)
(74) Representative: de Bruijn, Leendert C.

(57) **Abstract**

The invention relates to a method and a mould for forming objects (1) by means of injection moulding, in which parts (17-20) of the mould peripheral wall (14) can be exchanged, in order to obtain objects of a different outward appearance using a single mould. In one embodiment the wall parts (17-20) of the mould peripheral wall (14) or the mould core (13) are provided with detachable fixing means such as an oblique through bore (24) and guide pins (22), and/or a resilient element (28).

## Description

The invention relates to a method for successively forming at least two essentially identically shaped objects by means of injection moulding in an injection mould comprising a mould cavity which is bounded by a peripheral wall.

The invention also relates to a mould for forming such an object by means of injection moulding.

In the injection moulding of objects, for example of plastic serving trays, liquid plastic such as, for example, polyethylene, is introduced by means of extrusion into a mould cavity which is formed between a mould core, a mould bottom plate and mould peripheral walls. After forming of the serving tray, the mould core is moved away from the bottom plate and the serving tray which has been formed is removed from the mould cavity. Such moulds are formed with a very high degree of precision, and are of very durable design, on account of the pressures and temperatures prevailing and the large number of objects to be formed. When the design of the objects formed is changed, a completely new mould is generally necessary, which is very expensive.

The same applies to other plastic objects, in particular plastic tableware of the type commonly used in air travel. A wide variety of cups, trays, plates, dishes etc. are used here, of essentially the same shape, but with details, such as an embossing of the edge of a plate or the ear of a cup, or airlines logos, which differ for each airline.

One object of the present invention is to provide a method for forming at least two objects of a different outward appearance by means of injection moulding, making efficient use of a single mould.

A further object is to provide a method and mould by means of which it is possible to switch over very rapidly from one design of the formed object to another design thereof.

To this end, a method according to the invention is characterized in that the peripheral wall is constructed of at least one fixed wall part and one detachable wall part, and after a first object has been formed the detachable wall part is replaced by a wall part of essentially the same shape with a different profile, following which the second object is formed. Due to the fact that the shape of the mould remains virtually identical, and only the moulding profile of a part of the peripheral walls is adapted, a series of different products can be obtained in a simple and economical manner, while the basic shape of the object remains the same.

This means that, for example, serving trays can be formed with a large number of different vertical walls, while the bottom remains the same, cups can be formed with or without ears or feet, while the basic shape remains the same, or plates can have a different peripheral edge, while the central part remains the same.

It is preferable here for the mould side walls to be replaced, since the mould core is generally a relatively complex part which is provided with a number of heating elements.

If a serving tray or a dish is being formed, it is preferable for the corner parts of the mould to remain the same, and for the mould wall parts situated between the said corner parts to be changed, for example in order to change a pattern of openings in the side walls of a serving tray from stripes to circles, or to coronets and the like.

In particular, if the mould side walls are provided with a projecting embossing which forms openings in the side edges of the product to be formed, the mould side walls must be attached to the mould body in such a way that they are movable laterally, so that the moulded product can be removed from the mould. Moving the mould side walls laterally releases the edges of the moulded product, and the moulded product can be taken out of the mould cavity by moving the mould core. Such movable mould side wall parts are particularly suitable for exchanging with side wall parts of the same shape, but provided with a differently shaped profile or embossing.

The mould body preferably comprises at least four guide pins which are fixed relative to the bottom plate at an angle to the direction of opening. In this case the side wall parts of the mould each have an oblique through bore which is situated parallel to the guide pins and through which the guide pins extend. On movement of the mould core away from the bottom plate of the mould, the side wall parts are moved along the guide pins and pushed away from the side edges of the moulded product. For this purpose, a spring, for example, is accommodated between the mould core and the side wall parts of the mould.

The invention will be explained in greater detail with reference to the appended drawing, in which:
Figure 1 shows a perspective view of an object formed by injection moulding according to the present invention, in the form of a serving tray;
Figure 2 shows a top view of a mould for forming a product according to Figure 1;
Figure 3 shows a cross-section through a side wall part of the mould according to Figure 2 along the line III-III; and
Figure 4 shows a perspective view of a side wall part of the mould according to the present invention.

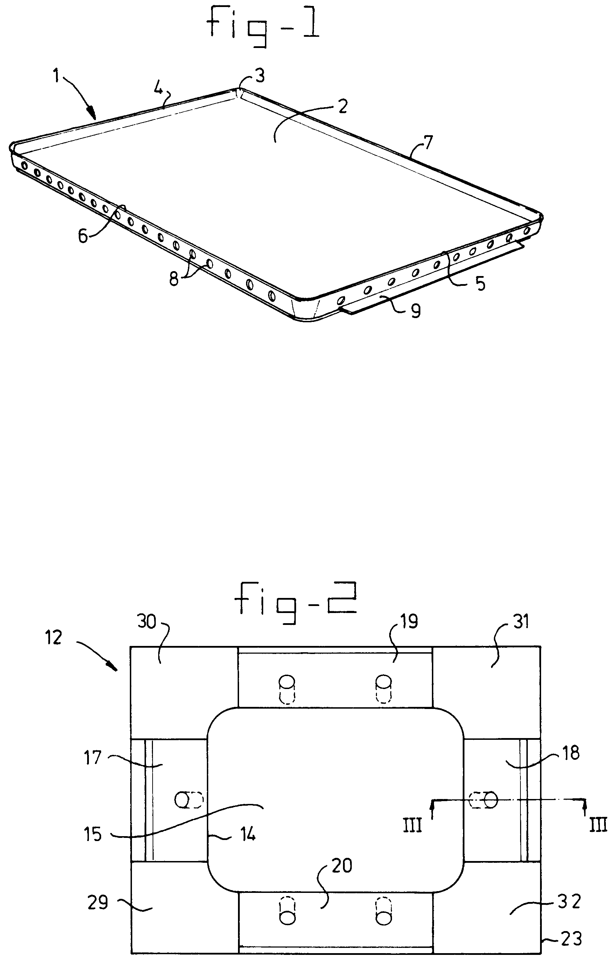

Figure 1 shows a plastic serving tray 1 of the type used, for example, on board aircraft. The serving tray 1 is composed of a bottom plate 2 and a peripheral edge 3 situated at right angles thereto. The overall dimensions of the object 1 are approximately 38 cm by 28 cm by 2.5 cm. The peripheral edge 3 is provided with a pattern 8 along side edge parts 5 and 6. The pattern 8 is formed by openings in the material of the side edges and comprises, for example, a logo or a decorative pattern in the form of circles, stripes, stars or other shaped figures. The side edge part 5, and a side edge part 4 situated opposite, is likewise provided with a supporting edge 9 projecting at right angles.

For use in air travel in particular, it is desirable for the serving trays shown in Figure 1 to have standard dimensions for various airlines. However, in order to preserve the airline's own identity, it is desirable for a recognizable pattern to be applied to these uniform serving trays. If trolleys with supporting profiles having a larger space between them than the width of the serving tray are used for stacking and transportation of the serving trays, it may also be desirable to be able to provide a dimensional adjustment for these serving trays by forming additional supporting edges 9. By adapting the side wall parts of the mould in which the serving tray 1 according to the invention is formed, it is possible to obtain a high degree of flexibility as regards the shape and the functionality of the side edge parts 4, 5, 6 and 7 of the serving tray 1.

Figure 2 shows a top view of a mould 12 according to the present invention. The mould 12 comprises a mould cavity 15 which is closed at one lowerside by a bottom plate and which comprises a peripheral wall 14 with a front wall part 17, a rear wall part 18 and side wall parts 19 and 20. The mould 12 comprises a mould body 23, to which the wall parts 17-20 are detachably connected. The mould body 23 also comprises fixed corner parts 29, 30, 31 and 32 which form part of the peripheral wall 14 of the mould.

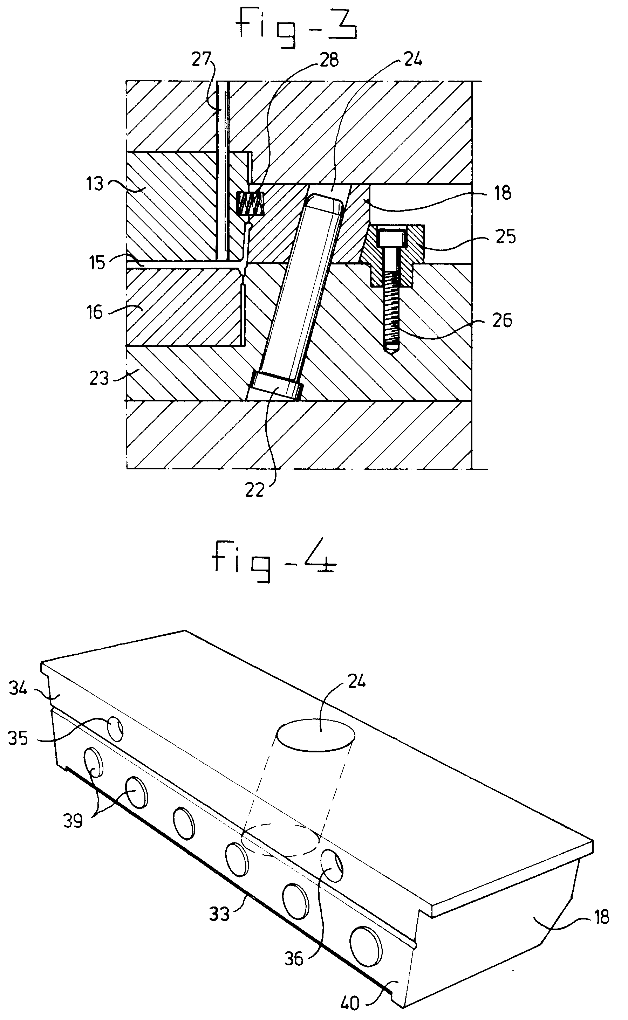

As shown in Figure 3, the mould cavity 15 is formed between the mould core 13 and the bottom plate 16. The bottom plate 16 is immovably fixed to the mould body 23. The mould core is movable by means of a movement device (not shown in the drawing) vertically upwards in an opening direction. On movement of the mould core in the opening direction, a releasing pin 27 projects through the core 13 and pushes the moulded object away from the mould core 13.

When the mould core 13 is moved in the vertical opening direction, the exchangeable side wall part 18 will move along the guide pin 22 and will be moved sideways. The guide pin 22 extends into an oblique through bore 24 of the side wall part 18. This makes the edge come clear of the object which has been formed in the mould cavity 15. In this case, when the mould is opened, the side wall part 18 is pressed away from the edge of the moulded object by means of the spring 28 which engages with the mould core 13. An oblique rear edge of the side wall part 18 is guided over a bevelled lug 25, which is fixed to the mould body 23 by means of a bolt 26.

After opening of the mould, the side wall part 18 can be pushed away from the guide pin 22 in a simple manner, and can be replaced by a side wall part of the same shape, but with a different profile. In this way serving trays, but also other objects which are formed by injection moulding, can be produced with mutually differing designs in a simple manner, without an adaptation of the entire mould being necessary.

Figure 4 shows a detached side wall part 18, an underside 40 of which is provided with a projecting embossing 39 with a pattern in the form of circular discs. A recess 33 is formed on the underside 40 of the side wall part 18, for forming the supporting edge 9. Situated in a top part 34 of the side wall part 18 are openings 35, 36 for accommodation of the spring 28. Alternatively, the side wall part 18 can be designed with an entirely smooth underside 40, in other words, without a profile or embossing 39 being present, and without recess 33.

Although the invention has been described with reference to a serving tray, the present invention can be applied advantageously to other objects formed by injection moulding, in which a peripheral edge is situated at right angles to a bottom plate, such as, for example, containers, cutlery trays, beakers and the like. The present invention can also be applied to plates, in which case the fixed mould parts bound a central part and the exchangeable mould parts form a peripheral edge of the plate, to cups, in which case the exchangeable mould parts bound a foot, an ear or a top edge, to cutlery, in which case the exchangeable mould parts bound a handle, and to other consumer articles in general which are formed by injection moulding, in particular cutlery.

## Claims

1. Method for successively forming at least two essentially identically shaped objects by means of injection moulding in an injection mould comprising a mould cavity which is bounded by a peripheral wall, characterized in that the peripheral wall is constructed of at least one fixed wall part and one detachable wall part, and after a first object has been formed the detachable wall part is replaced by a wall part of essentially the same shape with a different profile, following which the second object is formed.

2. Method according to Claim 1, in which the exchangeable wall part comprises an edge, a foot or an ear of a cup.

3. Method according to Claim 1, in which the exchangeable wall part comprises the edge or the central part of a plate.

4. Method according to Claim 1, in which the injection mould comprises a mould core (13) and mould peripheral walls (14), in which at least one of the mould peripheral walls (14) and the mould core (13) are provided with an embossing (39), and in which each object has a bottom plate (2) and a peripheral edge (3) which is situated at right angles to the bottom plate and has a front and rear edge part (4, 5) and two side edge parts (6, 7), characterized in that after the first object has been formed, only at least one of the mould peripheral walls (14) or the mould core (13) is at least partially replaced by mould peripheral walls (14) or a mould core (13) with an embossing which differs from that of the previous mould peripheral walls or core.

5. Method according to Claim 4, in which the peripheral edge (13) of the object (1) is provided with four corners between which the front, the rear and the side edge parts (4, 5, 6, 7) are situated, and in which the mould is provided with four mould corner parts (29, 30, 31, 32) and mould wall parts (17, 18, 19, 20) situated between them, characterized in that after the first object has been formed, at least one of the mould wall parts (17, 18, 19, 20) is changed, with mould corner parts (29, 30, 31, 32) being in a fixed position.

6. Method according to Claim 4 or 5, in which the embossing (39) on the mould side wall parts (17, 18, 19, 20) comprises a part projecting at intervals.

7. Method according to Claim 4, 5 or 6, characterized in that the embossing on the mould side wall parts (17, 18, 19, 20) comprises a recess (33) for forming supporting edge (9).

8. Mould for forming an object by means of injection moulding, comprising a mould cavity (15) which is bounded by a peripheral wall, characterized in that the peripheral wall is formed of at least two parts, at least one part comprising detachable fixing means for replacement thereof by a peripheral wall part of the same shape with a different profile.

9. Mould (12) according to Claim 8, comprising a mould core (13) and a mould cavity (15) situated around the mould core (13) and comprising a mould bottom plate (16) and a mould peripheral wall (14) which is situated at right angles to the bottom plate and has a front wall part (17), a rear wall part (18) and two side wall parts (19, 20), at least one of the mould peripheral walls (14) and the mould core (13) being provided with an embossing (39), characterized in that at least one of the mould core (13) and one or more of the wall parts (17, 18, 19, 20) of the mould peripheral wall (14) are provided with detachable fixing means (24), for replacement thereof by peripheral wall parts (17, 18, 19, 20) of the same shape with a different embossing.

10. Mould according to Claim 9, characterized in that the mould peripheral wall parts (17, 18, 19, 20) are detachably attached to a mould body (23) comprising the mould bottom plate (16).

11. Mould according to Claim 10, characterized in that the mould body (23) comprises four fixed corner parts (29, 30, 31, 32) which form part of the mould peripheral wall (14), in which the front, rear and side wall parts (17, 18, 19, 20) of the mould are detachably attached between the fixed corner parts (29, 30, 31, 32).

12. Mould according to one of Claims 8, 9, 10 or 11, characterized in that the mould core (13) is movable relative to the mould cavity (15) in an opening direction, while the mould body comprises at least four guide pins (22) which are fixed relative to the mould bottom plate (16) at an angle with the opening direction, and the mould side wall parts (17, 18, 19, 20) each have an oblique through bore (24) situated parallel to the guide pins, and through which the guide pins (22) extend, and in which the mould side wall parts (17, 18, 19, 20) are movably connected to the mould core (13) and can be moved relative to the mould core (13) in a transverse direction at right angles to the opening direction.

13. Mould according to Claim 12, characterized in that the side wall parts (17, 18, 19, 20) are each provided with a resilient element (28) which is placed between the side wall parts (17, 18, 19, 20) and the mould core (13).

14. Mould according to one of Claims 8 to 13, characterized in that a supply opening for the supply of liquid plastic is formed in the bottom plate (16) of the mould cavity (15).

15. Peripheral wall part for use in a mould (12) according to one of Claims 8 to 14, provided with detachable fixing means (24, 28) for attaching to a mould body (23) and/or mould core (13).
